# FASCICULE DE BREVET EUROPEEN

(11) **EP 3 638 520 B1**
(45) Date de publication et mention de la délivrance du brevet: **27.10.2021**
(21) Numéro de dépôt: 18728421.1
(22) Date de dépôt: 08.06.2018
(51) Int. Cl.: B60D 1/48, B60D 1/02, B60D 1/26, B60D 1/62

(54) **CHAPE D'ATTELAGE A VERROUILLAGE AUTOMATIQUE**
AUTOMATISCH VERRIEGELNDE ZUGSTANGENKOPPLUNG
AUTOMATIC LOCKING DRAWBAR COUPLING

(30) Priorité: 16.06.2017 FR 1755523
(43) Date de publication de la demande: 22.04.2020
(73) Titulaire: Lohr Industrie, 67980 Hangenbieten (FR)
(72) Inventeur: SCHEER, Daniel, 67190 Still (FR); GANTER, Didier, 67640 Fegersheim (FR); ANDRE, Jean-Luc, 67120 Molsheim (FR); SUTTER, Nicolas, 67100 Strasbourg (FR)
(74) Mandataire: Merckling, Norbert
(86) Numéro de dépôt international: PCT/EP2018/065188
(87) Numéro de publication internationale: WO 2018/228944

(56) Documents cités:
- EP-A2- 0 232 898
- WO-A1-98/40263
- WO-A1-2018/162030
- DE-A1- 4 412 111
- DE-U1- 8 219 259
- FR-A1- 3 044 135
- US-A1- 2010 044 998

## Description

### Domaine technique

La présente invention se rapporte à un dispositif d'attelage prévu pour atteler deux véhicules routiers comportant chacun au moins deux essieux.

L'invention concerne plus particulièrement un dispositif d'attelage comprenant une chape d'attelage solidaire d'un véhicule et un timon d'attelage solidaire de l'autre véhicule, ce timon d'attelage comportant un anneau d'attelage en extrémité prévu pour pénétrer et être verrouillé dans la chape d'attelage afin d'atteler les deux véhicules.

### Etat de la technique

Dans les dispositifs d'attelage prévus pour atteler deux véhicules routiers il est connu d'équiper un des véhicules avec un timon d'attelage comportant un anneau d'attelage en extrémité. Cet anneau d'attelage est prévu pour pénétrer dans la chape d'attelage d'un autre véhicule et y être verrouillé par l'introduction d'un axe d'attelage dans l'orifice central de l'anneau.

L'introduction de l'anneau d'attelage dans la chape d'attelage se fait généralement par le déplacement d'un véhicule à atteler en rapprochement de l'autre. En revanche, l'introduction de l'axe d'attelage dans l'orifice central de l'anneau se fait habituellement de manière manuelle. Cette opération, en plus de nécessiter de descendre du véhicule, est fastidieuse, et nécessite plusieurs manœuvres de la part du conducteur lorsqu'il n'a pas correctement rapproché les deux véhicules de sorte que l'anneau d'attelage pénètre dans la chape d'attelage.

En outre, cette opération peut être difficile et peut entraîner des risques de blessure pour l'opérateur, notamment en raison de la manipulation de pièce mécaniques lourdes et ou en engagement serré les unes avec les autres.

De même, les dispositifs d'attelage ne comportent généralement pas de moyen pour détecter que l'anneau d'attelage est bien positionné dans la chape d'attelage. Ainsi, ne sachant pas si l'anneau d'attelage est bien positionné ou non dans la chape d'attelage, l'opérateur doit effectuer de nombreuses manœuvres avec au moins un des véhicules, sans aucun moyen de savoir s'il est bien positionné ou non. En cas de mauvaise manœuvre, l'opérateur est même susceptible de détériorer un véhicule et/ou le dispositif d'attelage.

Enfin, les dispositifs d'attelage ne comportent généralement pas de moyen pour détecter que l'anneau d'attelage est bien verrouillé dans ladite chape. En effet, si ce verrouillage n'est pas correct, l'opérateur peut néanmoins être amenée à croire que les véhicules sont biens attelés et circuler avec lesdits véhicules, ce qui peut provoquer de grave accidents en cas de défaillance de l'attelage.

Ces problèmes deviennent encore plus critiques dans le cas où plus de deux véhicules routiers sont attelés à la suite les uns des autres pour former un train routier.

Par le document FR 3044135 on connaît un procédé d'exploitation d'une flotte de véhicules électriques individuels, ainsi qu'un système de gestion et d'utilisation d'une flotte de véhicules susceptibles de former un train routier. Ce document divulgue un attelage comprenant un timon équipé d'un anneau et une chape d'attelage, mais ne donne cependant aucun détail technique supplémentaire concernant les moyens mis en œuvre dans cet attelage.

En conséquence il existe une besoin pour un dispositif d'attelage permettant de répondre aux problèmes évoqués précédemment.

### Description de l'invention

L'objet de la présente invention vise par conséquent à pallier les inconvénients de l'art antérieur en proposant un nouveau dispositif d'attelage comprenant une chape d'attelage qui verrouille automatiquement un anneau d'attelage lorsque ce dernier pénètre dans la chape d'attelage.

Un autre objet de la présente invention vise également à proposer un nouveau dispositif d'attelage comportant des moyens pour informer l'opérateur à la fois que l'anneau d'attelage est bien positionné dans la chape d'attelage et qu'il est bien verrouillé dans celle-ci. Avantageusement, un tel dispositif d'attelage peut comporter également des moyens pour déverrouiller automatiquement l'anneau d'attelage.

Les objets assignés à l'invention sont atteints à l'aide d'un dispositif d'attelage prévu entre un premier et un second véhicules routiers pour atteler ces deux véhicules routiers, ces deux véhicules routiers comportant chacun au moins deux essieux, ledit dispositif d'attelage comprenant :
- un timon d'attelage solidaire du second véhicule routier et comportant un anneau d'attelage en extrémité ; et
- une traverse solidaire du premier véhicule routier et comportant une chape d'attelage prévue pour recevoir l'anneau d'attelage du premier véhicule routier à verrouillage lors de l'attelage des deux véhicules routiers ;
ledit dispositif d'attelage étant caractérisé en ce qu'il comprend un mécanisme de verrouillage automatique prévu pour verrouiller l'anneau d'attelage de manière automatique avec la chape d'attelage lorsqu'il pénètre dans la chape d'attelage suite au rapprochement de l'anneau d'attelage et de la chape d'attelage.

Ce dispositif d'attelage permet donc de verrouiller automatiquement un anneau d'attelage lorsque ce dernier pénètre dans la chape d'attelage.

Selon l'invention, le mécanisme de verrouillage automatique comprend les moyens suivants :
- un axe d'attelage prévu dans la traverse du premier véhicule routier, cet axe d'attelage étant perpendiculaire au timon d'attelage lorsque les deux véhicules routiers sont attelés, et mobile entre une position de verrouillage dans laquelle il pénètre dans la chape d'attelage pour traverser l'anneau d'attelage et une position de déverrouillage dans laquelle il libère l'anneau d'attelage de sorte que ce dernier puisse être extrait de la chape d'attelage ;
- un dispositif de déplacement prévu dans la traverse du premier véhicule routier pour déplacer l'axe d'attelage entre sa position de verrouillage et sa position de déverrouillage ;
- un dispositif de détection prévu dans la traverse du premier véhicule routier pour détecter la présence de l'anneau d'attelage dans la chape d'attelage, ledit dispositif de détection actionnant automatiquement le dispositif de déplacement lorsqu'il détecte la présence de l'anneau d'attelage dans la chape d'attelage afin que le dispositif de déplacement déplace l'axe d'attelage dans sa position de verrouillage.

Selon un autre exemple de mise en œuvre de l'invention, l'anneau d'attelage est situé dans un plan vertical et l'axe d'attelage est horizontal, ou bien l'anneau d'attelage est situé dans un plan horizontal et l'axe d'attelage est vertical.

Selon un exemple supplémentaire de mise en œuvre de l'invention, le dispositif d'attelage comprend un dispositif de commande qui, lorsqu'il est actionné par un utilisateur, commande le dispositif de déplacement de sorte qu'il déplace l'axe d'attelage dans sa position de déverrouillage.

Selon un exemple de mise en œuvre de l'invention, le dispositif d'attelage comporte un câble ou une tige filetée de déverrouillage relié(e) à l'axe d'attelage et qui déplace l'axe d'attelage dans sa position de déverrouillage lorsqu'il est actionné en traction par un utilisateur.

Selon un autre exemple supplémentaire de mise en œuvre de l'invention, le câble ou la tige filetée de déverrouillage est relié(e) à une vis accessible à un utilisateur, cette vis provoquant le déplacement longitudinal du câble ou de la tige filetée de déverrouillage lorsqu'elle est tournée.

Selon un exemple supplémentaire de mise en œuvre de l'invention, le dispositif de déplacement comprend un dispositif de poussée ou de rappel élastique qui force l'axe d'attelage en direction de la chape d'attelage, le dispositif de détection comprend un dispositif de blocage logé dans la chape d'attelage et qui empêche l'axe d'attelage de pénétrer dans ladite chape d'attelage, ce dispositif de blocage étant adapté pour venir en contact avec l'anneau d'attelage lors de l'attelage des deux véhicules routiers, ce qui libère l'axe d'attelage qui peut alors pénétrer dans ledit anneau d'attelage au sein de la chape d'attelage afin de verrouiller mutuellement les deux véhicules routiers. Cet exemple réalisation fournit un dispositif de verrouillage automatique.

Selon un exemple de mise en œuvre de l'invention, le dispositif de blocage comprend une pièce mobile en contact de butée avec l'extrémité libre de l'axe d'attelage, cette pièce mobile étant maintenue en position d'obturation devant l'axe d'attelage par un second dispositif de poussée ou de rappel élastique, ladite pièce mobile étant déplacée en dehors de sa position d'obturation lorsqu'elle entre en contact avec l'anneau d'attelage.

Selon un autre exemple de mise en œuvre de l'invention, le dispositif de déplacement comprend un vérin.

Selon un exemple de mise en œuvre supplémentaire de l'invention, le vérin est un vérin à simple effet associé à un ressort qui pousse la tige dudit vérin en position sortie, la position rétractée de la tige du vérin étant obtenue par la mise sous pression dudit vérin. Ceci fournit un dispositif de verrouillage automatique à sécurité positive.

Selon un exemple de mise en œuvre de l'invention, le dispositif de détection comprend un capteur de position ou un dispositif mécanique qui, lorsqu'il détecte la présence de l'anneau d'attelage dans la chape d'attelage ou lorsqu'il détecte la proximité dudit anneau d'attelage, provoque le fonctionnement du vérin en poussée de l'axe d'attelage dans la chape d'attelage ou met fin à la mise sous pression du vérin si celui-ci est associé à un dispositif de poussée ou de rappel élastique, ce qui provoque la poussée de l'axe d'attelage dans la chape d'attelage.

Selon un autre exemple de mise en œuvre de l'invention, l'axe d'attelage coulisse longitudinalement dans un logement comportant au moins une gorge réceptrice sur son pourtour interne, et l'axe d'attelage comporte au moins une pièce de verrouillage sur son pourtour externe prévues pour s'engager de manière libérable dans l'au moins une gorge réceptrice lorsque l'axe d'attelage est introduit dans l'anneau d'attelage, cet engagement de l'au moins une pièce de verrouillage dans l'au moins une gorge réceptrice verrouillant longitudinalement l'axe d'attelage en position.

Selon un exemple de mise en œuvre supplémentaire de l'invention, le dispositif de déplacement comporte un baladeur qui pénètre à l'intérieur de l'axe d'attelage de sorte que, lorsque le dispositif de déplacement déplace l'axe d'attelage dans sa position de verrouillage, le baladeur pousse l'au moins une pièce de verrouillage vers l'extérieur de sorte de la verrouiller dans l'au moins une gorge réceptrice.

Selon un exemple de mise en œuvre de l'invention, la traverse solidaire du premier véhicule routier comporte un premier boitier de connexion électrique et/ou fluidique et le timon d'attelage solidaire du second véhicule routier comporte un second boitier de connexion électrique et/ou fluidique, les premier et second boitiers de connexion électrique et/ou fluidique étant prévus pour s'engager mutuellement lors de l'attelage des deux véhicules routiers. Ces boitiers permettant aux véhicules de partager leurs réseaux d'énergie.

Selon un exemple de mise en œuvre supplémentaire de l'invention, le premier véhicule routier est un véhicule tracteur et le second véhicule routier est un véhicule suiveur.

Les objets assignés à l'invention sont atteints également à l'aide d'un véhicule routier comportant un dispositif d'attelage tel que décrit précédemment.

Selon un exemple de mise en œuvre de l'invention, ledit véhicule routier comporte un timon d'attelage à l'avant et une traverse comportant une chape d'attelage à l'arrière.

### Brève description des dessins

D'autres caractéristiques et avantages de la présente invention apparaîtront plus clairement à la lecture de la description qui va suivre, faite en référence aux dessins annexés, donnés à titre d'exemples non limitatifs, dans lesquels :
- la figure 1 est une vue en perspective de dessous de trois-quarts arrière de deux véhicules routiers équipés d'un dispositif d'attelage selon l'invention, ces deux véhicules routiers n'étant pas attelés ;
- la figure 2 est une vue en perspective similaire à celle de la figure 1, dans laquelle les deux véhicules routiers sont attelés au moyen d'un dispositif d'attelage selon l'invention ;
- la figure 3 est une vue en perspective de dessus de trois-quarts arrière d'un dispositif d'attelage selon l'invention dans laquelle la traverse comportant la chape d'attelage est représentée en coupe horizontale, tandis que le timon d'attelage est représenté en coupe verticale ;
- la figure 4 est une vue en perspective de dessus de trois-quarts d'une traverse selon l'invention représentée en coupe horizontale ;
- les figures 5 à 7 sont des vues de détail de la partie encerclée sur la figure 3 mécanique illustrant le fonctionnement de la pièce de verrouillage qui verrouille longitudinalement l'axe d'attelage en position ;
- les figures 8 à 10 sont des vues en perspective de dessus d'un dispositif d'attelage selon une variante de l'invention dans la laquelle la détection de la présence de l'anneau d'attelage dans la chape d'attelage est effectuée de manière mécanique, ces figures illustrant les étapes de détection et de verrouillage de l'anneau d'attelage dans la chape d'attelage ; et
- les figures 11 à 15 sont des vues en perspective de dessus d'un dispositif d'attelage selon une autre variante de l'invention dans la laquelle la détection de la présence de l'anneau d'attelage dans la chape d'attelage est effectuée de manière électronique, ces figures illustrant les étapes de détection et de verrouillage de l'anneau d'attelage dans la chape d'attelage.

### Mode(s) de réalisation de l'invention

Les éléments structurellement et fonctionnellement identiques présents sur plusieurs figures distinctes, sont affectés d'une même référence numérique ou alphanumérique.

Le dispositif d'attelage (1) selon l'invention est prévu pour être positionné entre un premier véhicule routier (2) et un second véhicule routier (3) adjacent pour atteler ces deux véhicules routiers (2, 3).

Les expressions "premier véhicule" et "second véhicule" ne traduisent aucun positionnement relatif, ni aucun rôle, pour ces véhicules, mais permet uniquement de les distinguer l'un de l'autre.

Selon un mode de réalisation préféré de l'invention, le premier véhicule routier (2) est un véhicule motorisé tracteur qui est positionné devant le second véhicule routier (3), qui est un véhicule suiveur.

Le dispositif d'attelage (1) selon l'invention est prévu pour équiper des véhicules routiers (2, 3) comportant chacun au moins deux essieux (4). Il s'agit préférentiellement de véhicules destinés au transport de personnes.

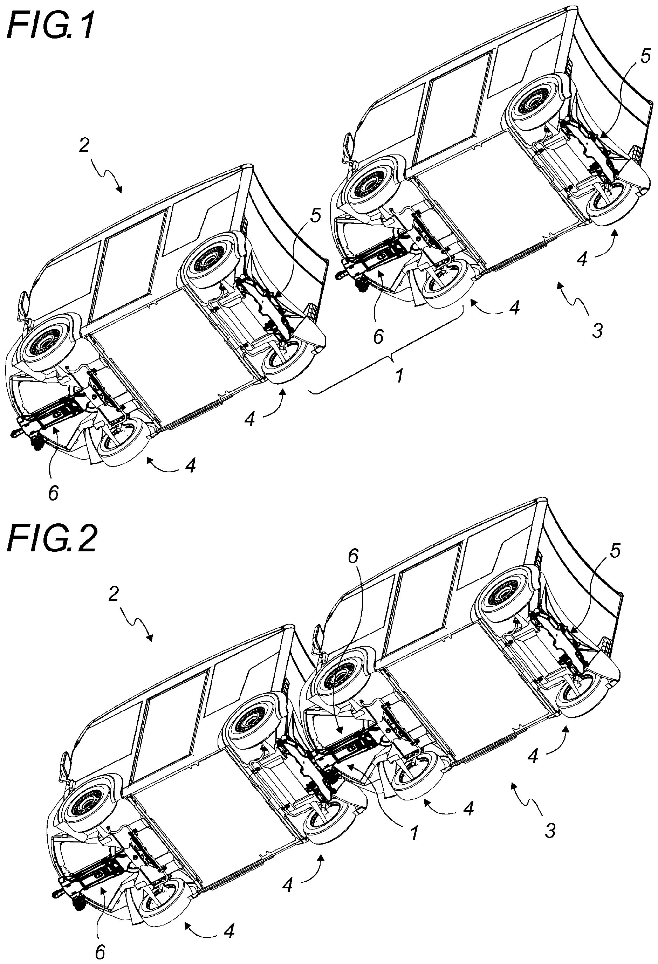

Tel que représenté sur les figures 1 à 3, le dispositif d'attelage (1) selon l'invention comprend une chape d'attelage (5) solidaire du premier véhicule routier (2) et un timon d'attelage (6) solidaire du second véhicule routier (3).

Selon un mode de réalisation préféré de l'invention, les premier et second véhicules routiers (2, 3) sont identiques, et prévus pour former des attelages d'au moins deux véhicules routiers (2, 3) à la suite les uns des autres afin de former un train routier. Ainsi, l'invention concerne également un véhicule routier unitaire (2, 3) comportant un dispositif d'attelage (1) selon l'invention, à savoir un timon d'attelage (6) prévu à une extrémité, par exemple à l'avant dudit véhicule et une chape d'attelage (5) prévue à l'extrémité opposée, par exemple à l'arrière dudit véhicule.

Le timon d'attelage (6) comporte un anneau d'attelage (7) au niveau de son extrémité distale et la chape d'attelage (5) comporte un logement récepteur (8) dans lequel l'anneau d'attelage (7) est prévu pour être reçu et verrouillé par un axe d'attelage (9) en vue de l'attelage des deux véhicules routiers (2, 3).

Par anneau d'attelage (7), on entend ici une pièce d'attelage femelle prévue pour être verrouillée par une pièce d'attelage mâle complémentaire. Sur les figures, la pièce d'attelage femelle est représentée sous la forme d'un anneau à travers laquelle pénètre un axe robuste désigné en tant qu'axe d'attelage (9). D'autres formes peuvent être envisagées pour l'anneau d'attelage (7) sans s'écarter du cadre de l'invention. Par exemple, l'anneau d'attelage (7) peut être sous la forme d'un crochet, d'une plaque percée ou d'une pièce présentant un évidement, tandis que l'axe d'attelage (9) peut être prévu pour pénétrer seulement en partie dans l'anneau d'attelage (7). Il est aisé pour l'homme du métier de prévoir d'autres formes pour l'anneau d'attelage (7) et pour l'axe d'attelage (9) du moment que l'anneau d'attelage (7) est sous la forme d'une pièce d'attelage femelle qui est verrouillée par son engagement au moins partiel avec un axe d'attelage (9) sous la forme d'une pièce d'attelage mâle complémentaire.

Dans la description qui suit, c'est par soucis de clarté et commodité de lecture que la pièce d'attelage femelle est désignée en tant qu'anneau d'attelage (7) et que la pièce d'attelage mâle complémentaire est désignée en tant qu'axe d'attelage (9).

La chape d'attelage (5) préférentiellement prévue dans une traverse (10) solidaire du premier véhicule routier (2).

Le dispositif d'attelage (1) selon l'invention particulier en ce qu'il comprend un mécanisme de verrouillage automatique prévu pour verrouiller l'anneau d'attelage (7) de manière automatique avec la chape d'attelage (5) lorsqu'il pénètre dans le logement récepteur (8) de la chape d'attelage (5) suite au rapprochement de l'anneau d'attelage (7) et de la chape d'attelage (5).

On notera que l'anneau d'attelage (7) peut par exemple être prévu dans un plan horizontal ou vertical. Dans les exemples de mode de réalisation de l'invention illustrés sur les figures, son orientation est choisie de sorte à réduire l'encombrement du mécanisme de verrouillage automatique du dispositif d'attelage (1). Dans le cas où l'anneau d'attelage (7) est situé dans un plan vertical, l'axe d'attelage (9) est horizontal, tandis que dans le cas où l'anneau d'attelage (7) est situé dans un plan horizontal, l'axe d'attelage (9) est vertical.

L'anneau d'attelage (7) est préférentiellement mobile d'avant en arrière et réciproquement, par exemple par le déplacement d'un des deux véhicules routiers (2, 3) par rapport à l'autre et/ou par le déplacement de l'anneau d'attelage (7) par rapport au second véhicule routier (3). Dans ce dernier cas, l'anneau d'attelage (7) peut être prévu au niveau de l'extrémité libre de la tige d'un vérin (34) logé dans le timon d'attelage (6).

Le mécanisme de verrouillage automatique comprend un axe d'attelage (9) prévu dans la traverse (10) du premier véhicule routier (2),

Cet axe d'attelage (9) est préférentiellement prévu pour être perpendiculaire au timon d'attelage (6) lorsque les deux véhicules routiers (2, 3) sont attelés.

L'axe d'attelage (9) est mobile entre une position de verrouillage dans laquelle il pénètre dans la chape d'attelage (5) pour s'engager à verrouillage avec l'anneau d'attelage (7), par exemple en traversant entièrement ou partiellement ce dernier, et une position de déverrouillage dans laquelle il libère l'anneau d'attelage (7) de sorte que ce dernier puisse être extrait de la chape d'attelage (5).

Lorsque l'axe d'attelage (9) est en position de verrouillage, les deux véhicules routiers (2, 3) sont attelés et ne peuvent être dissociés, tandis que lorsque l'axe d'attelage (9) est en position de déverrouillage, les deux véhicules routiers (2, 3) sont indépendants.

L'axe d'attelage (9) est préférentiellement sous la forme d'un arbre dont le diamètre est sensiblement inférieur à celui de l'ouverture traversante de l'anneau d'attelage (7) et dont l'extrémité libre (11) est de forme sensiblement arrondie ou conique pour faciliter sa pénétration de l'anneau d'attelage (7).

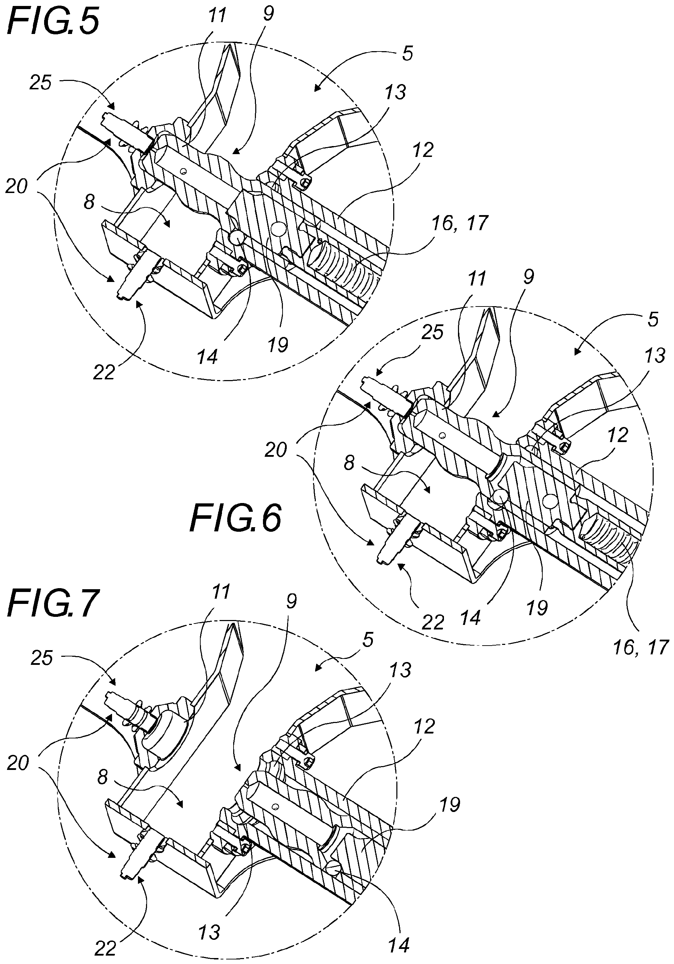

Selon un mode de réalisation de l'invention représenté en détail sur les figures 5 à 7, l'axe d'attelage (9) coulisse longitudinalement dans un logement (12) comportant au moins une gorge réceptrice (13) sur son pourtour interne. Selon ce mode de réalisation, l'axe d'attelage (9) comporte au moins une pièce de verrouillage (14) sur son pourtour externe prévues pour s'engager de manière libérable dans l'au moins une gorge réceptrice (13) lorsque l'axe d'attelage (9) est introduit dans l'anneau d'attelage (7), cet engagement de l'au moins une pièce de verrouillage (14) dans l'au moins une gorge réceptrice (13) verrouillant longitudinalement l'axe d'attelage (9) en position.

Le mécanisme de verrouillage automatique comprend également un dispositif de déplacement (15) prévu dans la traverse (10) du premier véhicule routier (2) pour déplacer l'axe d'attelage (9) entre sa position de verrouillage et sa position de déverrouillage.

Selon un mode de réalisation de l'invention, le dispositif de déplacement (15) comprend un dispositif de poussée ou de rappel élastique (16) qui force l'axe d'attelage (9) en direction de la chape d'attelage (5). Ce dispositif de poussée ou de rappel élastique (16) est préférentiellement sous la forme d'un ressort hélicoïdal (17).

Selon un autre mode de réalisation de l'invention, le dispositif de déplacement (15) comprend un vérin (18) qui déplace l'axe d'attelage (9) en rapprochement ou en éloignement de la chape d'attelage (5).

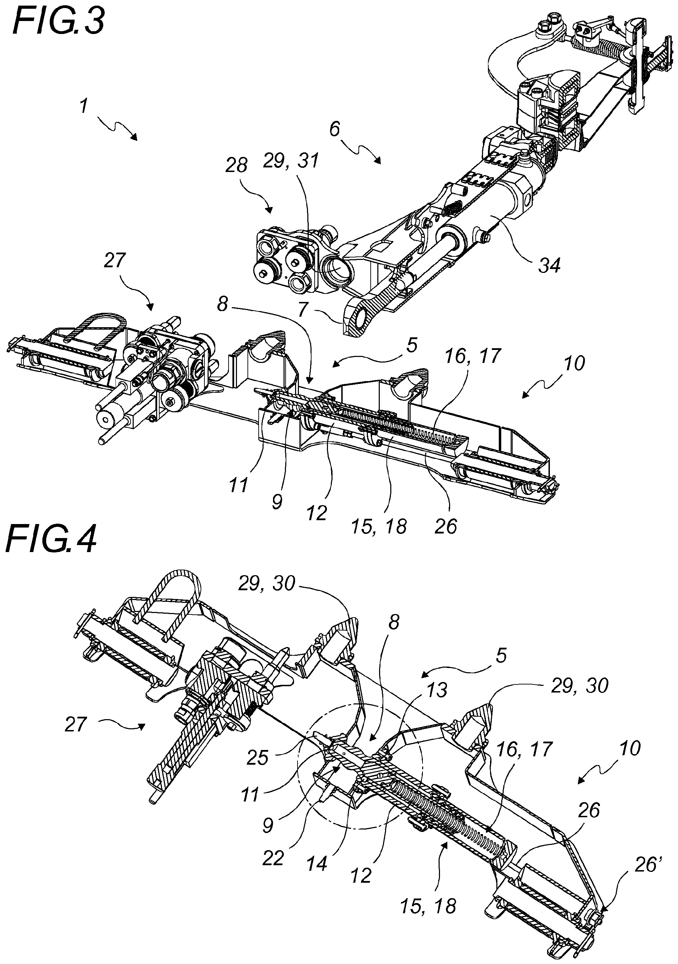

Selon une variante des modes de réalisation précédent de l'invention et représenté sur les figures 3 à 15, le vérin (18) est un vérin à simple effet associé à un ressort (17) qui pousse la tige dudit vérin (18) en position sortie, la position rétractée de la tige du vérin (18) étant obtenue par la mise sous pression dudit vérin (18). Cette variante permet d'obtenir un mécanisme de verrouillage automatique à sécurité positive, dans lequel l'anneau d'attelage (7) reste verrouillé par l'axe d'attelage (9) même en cas de défaillance hydraulique ou pneumatique. En effet, le verrouillage de l'anneau d'attelage (7) par l'axe d'attelage (9) s'effectue sans apport d'énergie.

Selon un mode de réalisation de l'invention représenté sur les figures 3 à 7 dans lequel l'axe d'attelage (9) coulisse longitudinalement dans un logement (12) comportant au moins une gorge réceptrice (13), le dispositif de déplacement (15) comporte un baladeur (19) qui pénètre à l'intérieur de l'axe d'attelage (9) de sorte que, lorsque le dispositif de déplacement (15) déplace l'axe d'attelage (9) dans sa position de verrouillage, le baladeur (19) pousse l'au moins une pièce de verrouillage (14) vers l'extérieur de sorte de la verrouiller dans l'au moins une gorge réceptrice (13). Le baladeur (19) présente préférentiellement une tête prévue pour venir en contact d'appui contre une surface d'appui complémentaire prévue à l'intérieur de l'axe d'attelage (9). Ladite tête du baladeur (19) présente également une gorge périphérique dont l'utilité est décrite ci-après.

Selon l'exemple de réalisation de l'invention représenté en détail sur les figures 5 à 7, la pièce de verrouillage (14) est sous la forme de billes qui sont montées mobiles radialement dans un logement prévu sur le pourtour externe de l'axe d'attelage (9).

Sur la figure 5, l'axe d'attelage (9) est en position de verrouillage, et son extrémité libre (11) est reçue dans un logement équipé d'un capteur de verrouillage (25) ce dernier détectant que l'axe d'attelage (9) est bien en position de verrouillage. Dans cette position, le ressort hélicoïdal (17) exerce un effort qui maintient l'axe d'attelage (9) dans le logement récepteur (8) de la chape d'attelage (5). Les billes font saillie dans la gorge réceptrice (13) et empêchent un retrait intempestif de l'axe d'attelage (9).

Sur la figure 6, le vérin (18) du dispositif de déplacement (15) est mis sous pression afin de déplacer l'axe d'attelage (9) en éloignement du logement récepteur (8) de la chape d'attelage (5) en vue de déplacer l'axe d'attelage (9) est en position de déverrouillage. Le vérin (18) agit sur le baladeur (19), qui maintenait jusqu'à présent les billes dans la gorge réceptrice (13). Dans cette position, les billes sont en appui sur le baladeur (19) et ne peuvent s'escamoter dans leur logement prévu sur le pourtour externe de l'axe d'attelage (9). Alors que le vérin (18) fait reculer le baladeur (19), les billes se déplacent dans la gorge périphérique de la tête du baladeur (19). Cette zone de réception des billes étant d'un diamètre inférieur, lesdites billes s'escamotent dans l'axe d'attelage (9).

Le vérin (18) poursuit alors sa course et afin de reculer complètement l'axe d'attelage (9) en dehors du logement récepteur (8) de la chape d'attelage (5).

Sur la figure 7, le vérin (18) du dispositif de déplacement (15) a déplacé l'axe d'attelage (9) hors du logement récepteur (8) de la chape d'attelage (5). L'axe d'attelage (9) est alors en position de déverrouillage, la chape d'attelage (5) est libre de recevoir l'anneau d'attelage (7).

Le mécanisme de verrouillage automatique comprend aussi un dispositif de détection (20) prévu dans la traverse (10) du premier véhicule routier (2) pour détecter la présence de l'anneau d'attelage (7) dans la chape d'attelage (5). Lorsqu'il détecte la présence et le bon positionnement de l'anneau d'attelage (7) dans la chape d'attelage (5) en vue de son verrouillage, le dispositif de détection (20) actionne automatiquement le dispositif de déplacement (15) afin que ce dernier déplace l'axe d'attelage (9) dans sa position de verrouillage.

Le dispositif de détection (20) de la présence de l'anneau d'attelage (7) peut être mécanique ou électronique. On dit également que le dispositif de détection (20) peut être matériel ou immatériel.

De manière générale, dans le cas où le dispositif de détection (20) est mécanique, une pièce mobile (21) est logée dans la chape d'attelage (5) et déplacée par la pénétration de l'anneau d'attelage (7) dans la chape d'attelage (5). Lorsque l'anneau d'attelage (7) est dans la position adéquate en vue de son verrouillage, le déplacement de ladite pièce mobile (21) actionne alors le dispositif de déplacement (15) pour verrouiller l'anneau d'attelage (7).

De manière générale, dans le cas où le dispositif de détection (20) est électronique, au moins un capteur de position (22) détecte la présence de l'anneau d'attelage (7) dans la chape d'attelage (5) et, lorsque cet au moins un capteur de position (22) détecte que l'anneau d'attelage (7) est dans la position adéquate en vue de son verrouillage, il actionne le dispositif de déplacement (15). Cet actionnement peut être indirect. En effet, l'au moins un capteur de position (22) peut être relié à une carte électronique et/ou à un dispositif informatique qui traite les informations provenant de chacun des capteurs de position (22) et qui pilote notamment le dispositif de déplacement (15), au moins en verrouillage de l'anneau d'attelage (7). L'au moins un capteur de position (22) peut par exemple être un capteur de contact, un capteur magnétique, un capteur optique ou un capteur inductif. Il peut être prévu pour détecter la proximité ou la présence de l'anneau d'attelage (7) dans la chape d'attelage (5).

Bien entendu, le dispositif de détection (20) peut combiner plusieurs moyens de détection, y compris des moyens mécaniques et électroniques.

Le dispositif de détection (20) peut comprendre un dispositif de blocage (23) logé dans la chape d'attelage (5) et qui empêche l'axe d'attelage (9) de pénétrer dans ladite chape d'attelage (5). Ce dispositif de blocage (23) est adapté pour venir en contact avec l'anneau d'attelage (7) lorsque celui-ci est déplacé dans la chape d'attelage (5), en vue de l'attelage des deux véhicules routiers (2, 3). Le dispositif de blocage (23) est alors effacé et n'empêche plus l'axe d'attelage (9) de pénétrer dans ladite chape d'attelage (5), ce qui libère l'axe d'attelage (9) qui peut alors pénétrer dans ledit anneau d'attelage (7) au sein de la chape d'attelage (5) afin de verrouiller mutuellement les deux véhicules routiers (2, 3) routiers.

Un tel dispositif de blocage (23) trouve notamment son intérêt quand l'axe d'attelage (9) est naturellement poussé en direction de la chape d'attelage (5), par exemple par un ressort. En effet, l'effacement automatique du dispositif de blocage (23) lorsque l'anneau d'attelage (7) est déplacé dans la chape d'attelage (5) permet un verrouillage automatique et sans apport d'énergie de l'anneau d'attelage (7) par l'axe d'attelage (9).

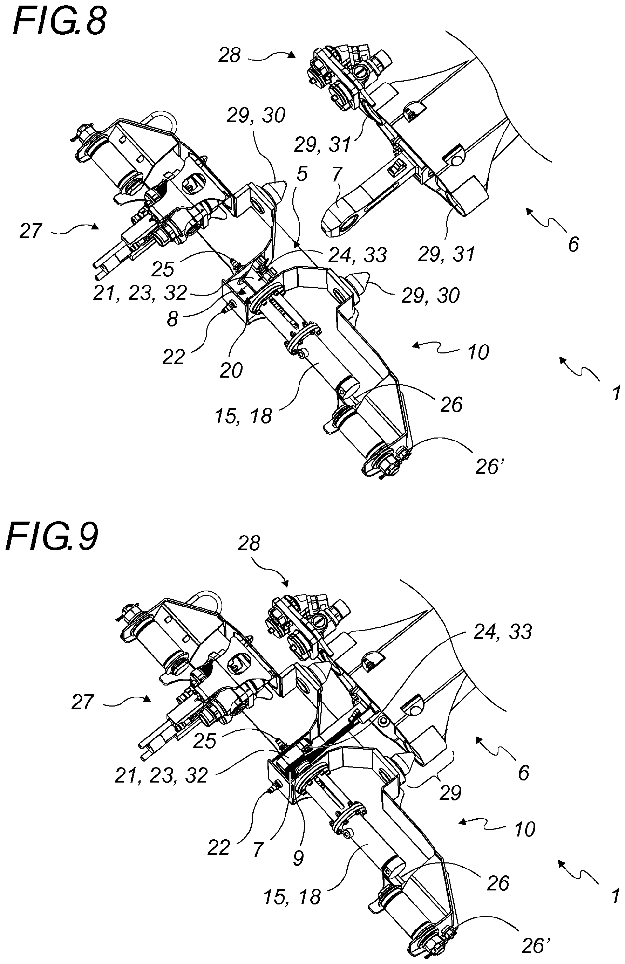

A titre d'exemple, selon un mode de réalisation de l'invention représenté sur les figures 8 à 10 et dans lequel le dispositif de détection (20) est mécanique, le dispositif de blocage (23) comprend une pièce mobile (21), sous la forme d'un volet basculant (32), dont les flancs sont en contact de butée avec l'extrémité libre (11) de l'axe d'attelage (9), cette pièce mobile (21) étant maintenue en position d'obturation devant l'axe d'attelage (9) par un second dispositif de poussée ou de rappel élastique (24), ladite pièce mobile (21) étant déplacée en dehors de sa position d'obturation lorsqu'elle entre en contact avec l'anneau d'attelage (7) et que celui-ci est bien positionné dans la chape d'attelage (5) en vue de son verrouillage.

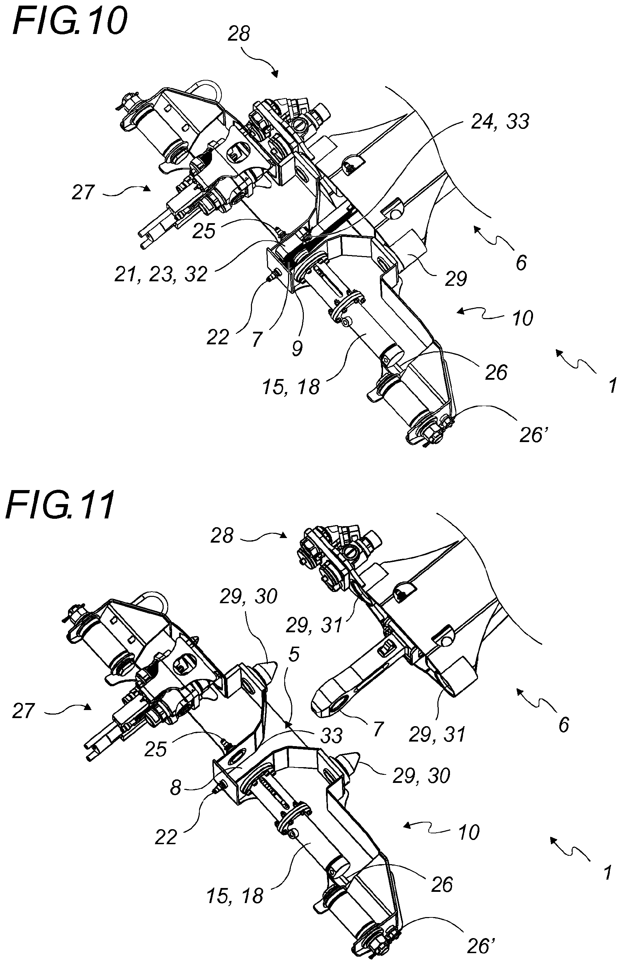

Selon un autre mode de réalisation de l'invention représenté à titre d'exemple sur les figures 11 à 15 et dans lequel le dispositif de détection (20) est électronique, le dispositif de déplacement (15) comprend un vérin (18) dont la tige mobile est poussée en direction de la chape d'attelage (5) par un dispositif de poussée ou de rappel élastique (16) sous la forme d'un ressort hélicoïdal (17), la tige mobile dudit vérin (18) étant déplacée en éloignement de la chape d'attelage (5) par la mise sous pression du vérin (18). Selon ce mode de réalisation, le dispositif de détection (20) comprend un capteur de position (22) ou un dispositif mécanique qui, lorsqu'il détecte la présence de l'anneau d'attelage (7) dans la chape d'attelage (5) ou lorsqu'il détecte la proximité dudit anneau d'attelage (7), met fin à la mise sous pression du vérin (18), ce qui provoque la poussée de l'axe d'attelage (9) dans la chape d'attelage (5).

Le dispositif de détection (20) comprend préférentiellement également au moins capteur de verrouillage (25), qui détecte que l'anneau d'attelage (7) est bien verrouillé par l'axe d'attelage (9).

Afin de pouvoir déverrouiller le mécanisme de verrouillage automatique, ce dernier peut comprendre des moyens pour extraire l'axe d'attelage (9) en dehors de l'anneau d'attelage (7). Ces moyens sont préférentiellement actionnés à distance.

Selon un mode de réalisation de l'invention, le mécanisme de verrouillage automatique comprend un dispositif de commande qui, lorsqu'il est actionné par un utilisateur, commande le dispositif de déplacement (15) de sorte qu'il déplace l'axe d'attelage (9) dans sa position de déverrouillage. Par exemple, dans le cas où le dispositif de déplacement (15) comprend un vérin (18) à simple effet associé à un ressort (17) qui pousse la tige dudit vérin (18) en position sortie, actionner le dispositif de commande pilote la mise sous pression du vérin (18), ce qui provoque le désengagement de l'axe d'attelage (9) par rapport à l'anneau d'attelage (7), et qui dissocie les deux véhicules routiers (2, 3).

Selon un autre mode de réalisation de l'invention, le mécanisme de verrouillage automatique comporte un câble ou une tige filetée de déverrouillage (26) relié(e) à l'axe d'attelage (9) et qui déplace l'axe d'attelage (9) dans sa position de déverrouillage lorsqu'il est actionné par un utilisateur, en traction pour le câble ou en rotation pour la tige filetée (26). Cet actionnement en traction peut être effectué manuellement, par exemple à l'aide d'une poigné équipant l'extrémité libre du câble de déverrouillage, il peut également être assisté par un dispositif mécanique ou motorisé. Selon une variante préférée, la tige filetée (26) est reçue à rotation dans une vis filetée (26') accessible à l'utilisateur depuis l'extérieur du véhicule, cette vis provoquant le déplacement longitudinal de la tige filetée (26) lorsqu'elle est tournée. Bien entendu, le câble de déverrouillage ou la tige filetée (26) peuvent être remplacés par un système de tringlerie ou tout au système permettant de déplacer à distance l'axe d'attelage (9) en désengagement de l'anneau d'attelage (7).

Selon un mode de réalisation de l'invention représenté sur les figures 3, et 8 à 15, la traverse (10) solidaire du premier véhicule routier (2) et le timon d'attelage (6) solidaire du second véhicule routier comportent chacun un boitier (27, 28) de connexion électrique et/ou fluidique, respectivement un premier boitier (27) de connexion électrique et/ou fluidique et un second boitier (28) de connexion électrique et/ou fluidique. Lorsqu'ils sont raccordés, ces boitiers (27, 28) permettent aux véhicules (2, 3) attelés de partager leurs réseaux électriques et/ou fluidiques.

Le dispositif d'attelage (1) selon l'invention est préférentiellement prévu de sorte que les premier et second boitiers (27, 28) de connexion électrique et/ou fluidique s'engagent mutuellement lors de l'attelage des deux véhicules routiers (2, 3). Cet engagement des deux boitiers (27, 28) peut être automatique lors du rapprochement des deux véhicules routiers (2, 3), ou l'un des boitiers (27, 28) peut être motorisé en vue d'être déplacé vers l'autre boîtier en vue de leur connexion mutuelle.

Des moyens de centrage (29) peuvent être prévus entre les deux véhicules routiers (2, 3) pour assurer le centrage des deux véhicules routiers (2, 3), ce qui facilite l'engagement automatique des boitiers (27, 28). Ces moyens de centrage (29) sont préférentiellement sous la forme de cônes (30) prévus sur la traverse (10), et prévue pour pénétrer dans des logements récepteur (31) prévus sur le timon d'attelage (6) lorsque les deux véhicules routiers (2, 3) sont rapprochés l'un vers l'autres ou que la chape d'attelage (5) et le timon d'attelage (6) sont mutuellement rapprochés.

Afin de mieux comprendre l'invention, nous allons maintenant décrire le fonctionnement étape par étape de deux modes de réalisation de l'invention donnés à titre d'exemple.

### Premier mode de réalisation représenté sur les figures 8 à 10

La figure 8 illustre la phase d'approche, dans laquelle l'anneau d'attelage (7) est entièrement sorti et en approche de la chape d'attelage (5). La pièce mobile (21) logée dans le logement récepteur (8) de la chape d'attelage (5) est sous la forme d'un volet basculant (32). Il est contraint en position verticale ou oblique dans la chape d'attelage (5) par le second dispositif de poussée ou de rappel élastique (24), ici sous la forme d'un ressort à torsion (33). L'extrémité libre (11) de l'axe d'attelage (9) est en butée contre un des flancs latéraux du volet basculant (32), ce qui empêche la pénétration de l'axe d'attelage (9) la chape d'attelage (5). Ainsi, l'axe d'attelage (9) est escamoté en position de déverrouillage : la chape d'attelage (5) prête à recevoir l'anneau d'attelage (7).

Guidé et centré par l'ouverture en forme de V de la chape d'attelage (5), l'anneau d'attelage (7) pénètre dans le logement récepteur (8) de celle-ci (figure 9). L'anneau d'attelage (7) est centré dans la chape d'attelage (5), en position adéquate en vue de son verrouillage. La pénétration de l'anneau d'attelage (7) dans le logement récepteur (8) de la chape d'attelage (5) soulève automatiquement le volet basculant (32), faisant office de dispositif de détection (20) de présence de l'anneau d'attelage (7). Le volet basculant (32) étant soulevé, son flanc n'est plus en butée contre l'extrémité libre (11) de l'axe d'attelage (9), qui est alors poussé automatiquement dans le logement récepteur (8) de la chape d'attelage (5) par le ressort hélicoïdal (17).

L'anneau d'attelage (7) est verrouillé dans la chape d'attelage (5). Le capteur de verrouillage (25) détecte que l'anneau d'attelage (7) est bien verrouillé par l'axe d'attelage (9).

Le vérin (34) logé dans le timon d'attelage (6) est actionné en position rétractée pour rapprocher les véhicules (2, 3). Leur position mutuelle est guidée et centrée grâce aux moyens de centrage (29). La traverse (10) et le timon d'attelage (6) sont alors associés et fermement plaqués l'un contre l'autre de manière à former un seul ensemble mécanique (figure 10).

Les deux véhicules (2, 3) étant maintenant attelés et centrés, le second boitier (28) de connexion électrique du timon d'attelage (6) peut être déplacé en direction du premier boitier (27) de connexion électrique de la traverse (10) pour leur connexion mutuelle afin que les véhicules (2, 3) attelés partagent leurs réseaux électriques et/ou fluidiques.

L'au moins capteur de verrouillage (25) détecte que l'anneau d'attelage (7) est bien verrouillé par l'axe d'attelage (9) et le timon d'attelage (6) est fermement associé avec la traverse (10). Un signal est transmis au conducteur du véhicule tracteur, qui sait qu'il peut maintenant circuler sans risque de défaillance de l'attelage.

Les opérations inverses permettent de dissocier les deux véhicules (2, 3). Le retrait de l'axe d'attelage (9) en dehors de l'anneau d'attelage (7) se faisant par la mise sous pression du vérin (18) ou, en cas de panne hydraulique ou pneumatique, par actionnement du câble ou de la tige filetée de déverrouillage (26). Lors du retrait de l'axe d'attelage (9) en dehors de l'anneau d'attelage (7), l'axe d'attelage (9) ressort du logement récepteur (8) de la chape d'attelage (5), ce qui permet au volet basculant (32) de reprendre automatiquement sa position d'équilibre sensiblement verticale ou oblique dans la chape d'attelage (5) afin de bloquer l'axe d'attelage (9) en position de déverrouillage.

### Second mode de réalisation représenté sur les figures 11 à 15

La figure 11 illustre la phase d'approche, dans laquelle l'anneau d'attelage (7) est entièrement sorti et en approche de la chape d'attelage (5). La chape d'attelage (5) est ouverte, c'est-à-dire que l'axe d'attelage (9) est escamoté en position de déverrouillage : la chape d'attelage (5) prête à recevoir l'anneau d'attelage (7).

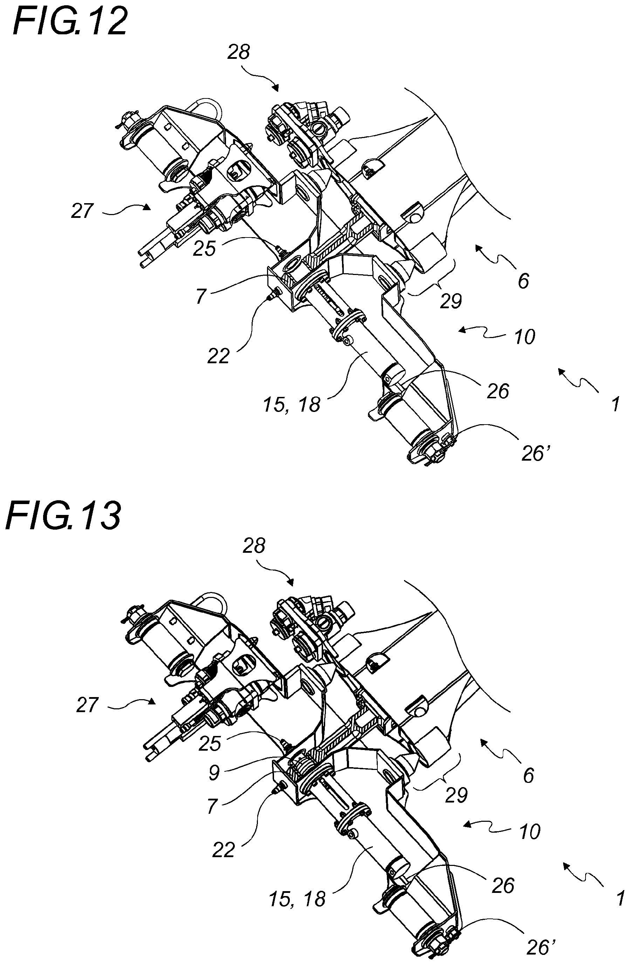

Guidé et centré par l'ouverture en forme de V de la chape d'attelage (5), l'anneau d'attelage (7) pénètre dans le logement récepteur (8) de celle-ci (figure 12). L'anneau d'attelage (7) est centré dans la chape d'attelage (5), en position adéquate en vue de son verrouillage. L'au moins un capteur de position (22) détecte la présence de l'anneau d'attelage (7) dans la chape d'attelage (5).

Suite à la détection de la présence de l'anneau d'attelage (7), l'au moins un capteur de position (22) actionne le dispositif de déplacement (15) en verrouillage. La pression dans le vérin (18) est relâchée et l'axe d'attelage (9) pénètre dans l'anneau d'attelage (7). Cette pénétration est guidée et facilité par la forme sensiblement arrondie ou conique de l'extrémité libre (11) de l'axe d'attelage (9). L'anneau d'attelage (7) est verrouillé dans la chape d'attelage (5) (figure 13). Le capteur de verrouillage (25) détecte que l'anneau d'attelage (7) est bien verrouillé par l'axe d'attelage (9).

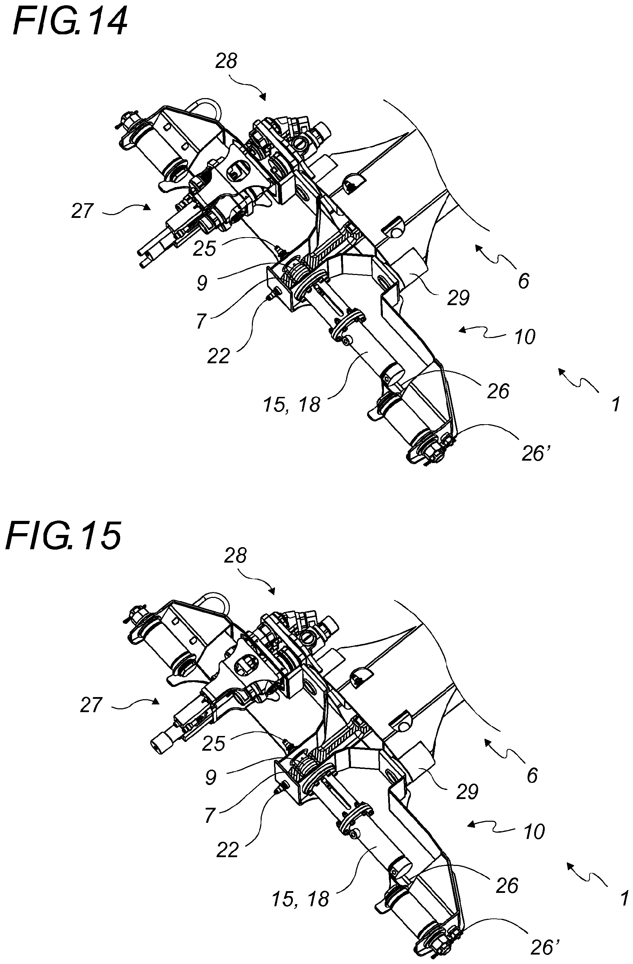

Le vérin (34) logé dans le timon d'attelage (6) est actionné en position rétractée pour rapprocher les véhicules (2, 3). Leur position mutuelle est guidée et centrée grâce aux moyens de centrage (29) (figure 14). La traverse (10) et le timon d'attelage (6) sont alors associés et fermement plaqués l'un contre l'autre de manière à former un seul ensemble mécanique.

Les deux véhicules (2, 3) étant maintenant attelés et centrés, le second boitier (28) de connexion électrique du timon (6) est déplacé en direction du premier boitier (27) de connexion électrique de la traverse (10) pour leur connexion mutuelle. Une fois cette connexion établie, les véhicules (2, 3) attelés partagent leurs réseaux électriques et/ou fluidiques (figure 15).

L'au moins capteur de verrouillage (25) détecte que l'anneau d'attelage (7) est bien verrouillé par l'axe d'attelage (9) et le timon d'attelage (6) est fermement associé avec la traverse (10). Un signal est transmis au conducteur du véhicule tracteur, qui sait qu'il peut maintenant circuler sans risque de défaillance de l'attelage.

Les opérations inverses permettent de dissocier les deux véhicules (2, 3). Le retrait de l'axe d'attelage (9) en dehors de l'anneau d'attelage (7) se faisant par la mise sous pression du vérin (18) ou, en cas de panne hydraulique ou pneumatique, par actionnement du câble ou de la tige filetée de déverrouillage (26).

Il est évident que la présente description ne se limite pas aux exemples explicitement décrits, mais comprend également d'autres modes de réalisation et/ou de mise en œuvre. Ainsi, une caractéristique technique décrite peut être remplacée par une caractéristique technique équivalente sans sortir du cadre de la présente invention tel que défini par les revendications annexées et une étape décrite de mise en œuvre du procédé peut être remplacée par une étape équivalente sans sortir du cadre de l'invention tel que défini par les revendications.

## Revendications

1. Dispositif d'attelage (1) destiné à atteler un premier et un second véhicules routiers (2, 3), ces deux véhicules routiers (2, 3) comportant chacun au moins deux essieux (4), ledit dispositif d'attelage (1) comprenant :
• un timon d'attelage (6) destiné à être solidaire du second véhicule routier (3) et comportant un anneau d'attelage (7) en extrémité ; et
• une traverse (10) destinée à être solidaire du premier véhicule routier (2) et comportant une chape d'attelage (5) prévue pour recevoir l'anneau d'attelage (7) à verrouillage ; ledit dispositif d'attelage (1) comprenant un mécanisme de verrouillage automatique prévu pour verrouiller l'anneau d'attelage (7) de manière automatique avec la chape d'attelage (5) lorsqu'il pénètre dans la chape d'attelage (5) suite au rapprochement de l'anneau d'attelage (7) et de la chape d'attelage (5), et **caractérisé en ce que** le mécanisme de verrouillage automatique comprend les moyens suivants :
• un axe d'attelage (9) prévu mobile dans la traverse (10) entre une position de verrouillage dans laquelle il pénètre dans la chape d'attelage (5) pour traverser l'anneau d'attelage (7) et une position de déverrouillage dans laquelle il libère l'anneau d'attelage (7) de sorte que ce dernier puisse être extrait de la chape d'attelage (5), l'axe d'attelage (9) étant perpendiculaire au timon d'attelage (6) lorsqu'il est en position de verrouillage ;
• un dispositif de déplacement (15) prévu dans la traverse (10) pour déplacer l'axe d'attelage (9) entre sa position de verrouillage et sa position de déverrouillage ;
• un dispositif de détection (20) prévu dans la traverse (10) pour détecter la présence de l'anneau d'attelage (7) dans la chape d'attelage (5), ledit dispositif de détection (20) actionnant automatiquement le dispositif de déplacement (15) lorsqu'il détecte la présence de l'anneau d'attelage (7) dans la chape d'attelage (5) afin que le dispositif de déplacement (15) déplace l'axe d'attelage (9) dans sa position de verrouillage.

2. Dispositif d'attelage (1) selon la revendication 1, **caractérisé en ce que** l'anneau d'attelage (7) est situé dans un plan vertical et l'axe d'attelage (9) est horizontal, ou **en ce que** l'anneau d'attelage (7) est situé dans un plan horizontal et l'axe d'attelage (9) est vertical.

3. Dispositif d'attelage (1) selon la revendication 1 ou la revendication 2, **caractérisé en ce qu'**il comprend un dispositif de commande qui, lorsqu'il est actionné par un utilisateur, commande le dispositif de déplacement (15) de sorte qu'il déplace l'axe d'attelage (9) dans sa position de déverrouillage.

4. Dispositif d'attelage (1) selon l'une quelconque des revendications précédentes, **caractérisé en ce qu'**il comporte un câble ou une tige filetée de déverrouillage (26) relié(e) à l'axe d'attelage (9) et qui déplace l'axe d'attelage (9) dans sa position de déverrouillage lorsqu'il ou elle est actionné(e) par un utilisateur.

5. Dispositif d'attelage (1) selon la revendication 4, **caractérisé en ce que** le câble ou la tige filetée de déverrouillage (26) est relié(e) à une vis (26') accessible à un utilisateur, cette vis (26') provoquant le déplacement longitudinal du câble de déverrouillage ou de la tige filetée (26) lorsqu'elle est tournée.

6. Dispositif d'attelage (1) selon l'une quelconque des revendications précédentes, **caractérisé en ce que** le dispositif de déplacement (15) comprend un dispositif de poussée ou de rappel élastique (16) qui force l'axe d'attelage (9) en direction de la chape d'attelage (5), **en ce que** le dispositif de détection (20) comprend un dispositif de blocage (23) logé dans la chape d'attelage (5) et qui empêche l'axe d'attelage (9) de pénétrer dans ladite chape d'attelage (5), ce dispositif de blocage (23) étant adapté pour venir en contact avec l'anneau d'attelage (7) lors du rapprochement de l'anneau d'attelage (7) et de la chape d'attelage (5), ce qui libère l'axe d'attelage (9) qui peut alors pénétrer dans ledit anneau d'attelage (7) au sein de la chape d'attelage (5) afin de verrouiller l'anneau d'attelage (7) avec la chape d'attelage (5) .

7. Dispositif d'attelage (1) selon la revendication 6, **caractérisé en ce que** le dispositif de blocage (23) comprend une pièce mobile (21) en contact de butée avec l'extrémité libre (11) de l'axe d'attelage (9), cette pièce mobile (21) étant maintenue en position d'obturation devant l'axe d'attelage (9) par un second dispositif de poussée ou de rappel élastique (24), ladite pièce mobile (21) étant déplacée en dehors de sa position d'obturation lorsqu'elle entre en contact avec l'anneau d'attelage (7).

8. Dispositif d'attelage (1) selon l'une quelconque des revendications précédentes, **caractérisé en ce que** le dispositif de déplacement (15) comprend un vérin (18).

9. Dispositif d'attelage (1) selon la revendication 8, **caractérisé en ce que** le vérin (18) est un vérin à simple effet associé à un ressort (17) qui pousse la tige dudit vérin (18) en position sortie, la position rétractée de la tige du vérin (18) étant obtenue par la mise sous pression dudit vérin (18).

10. Dispositif d'attelage (1) selon la revendication 8 ou la revendication 9, **caractérisé en ce que** le dispositif de détection (20) comprend un capteur de position (22) ou un dispositif mécanique qui, lorsqu'il détecte la présence de l'anneau d'attelage (7) dans la chape d'attelage (5) ou lorsqu'il détecte la proximité dudit anneau d'attelage (7), provoque le fonctionnement du vérin (18) en poussée de l'axe d'attelage (9) dans la chape d'attelage (5) ou met fin à la mise sous pression du vérin (18) si celui-ci est associé à un dispositif de poussée ou de rappel élastique (16), ce qui provoque la poussée de l'axe d'attelage (9) dans la chape d'attelage (5).

11. Dispositif d'attelage (1) selon l'une quelconque des revendications précédentes, **caractérisé en ce que** l'axe d'attelage (9) coulisse longitudinalement dans un logement (12) comportant au moins une gorge réceptrice (13) sur son pourtour interne, et **en ce que** l'axe d'attelage (9) comporte au moins une pièce de verrouillage (14) sur son pourtour externe prévues pour s'engager de manière libérable dans l'au moins une gorge réceptrice (13) lorsque l'axe d'attelage (9) est introduit dans l'anneau d'attelage (7), cet engagement de l'au moins une pièce de verrouillage (14) dans l'au moins une gorge réceptrice (13) verrouillant longitudinalement l'axe d'attelage (9) en position.

12. Dispositif d'attelage (1) selon la revendication 11, **caractérisé en ce que** le dispositif de déplacement (15) comporte un baladeur (19) qui pénètre à l'intérieur de l'axe d'attelage (9) de sorte que, lorsque le dispositif de déplacement (15) déplace l'axe d'attelage (9) dans sa position de verrouillage, le baladeur (19) pousse l'au moins une pièce de verrouillage (14) vers l'extérieur de sorte de la verrouiller dans l'au moins une gorge réceptrice (13).

13. Dispositif d'attelage (1) selon l'une quelconque des revendications précédentes, **caractérisé en ce que** :
• la traverse (10) destinée à être solidaire du premier véhicule routier (2) comporte un premier boitier (27) de connexion électrique et/ou fluidique ;
• le timon d'attelage (6) destiné à être solidaire du second véhicule routier (3) comporte un second boitier (28) de connexion électrique et/ou fluidique ;
• les premier et second boitiers (27, 28) de connexion électrique et/ou fluidique étant prévus pour s'engager mutuellement lors du rapprochement de l'anneau d'attelage (7) et de la chape d'attelage (5).

14. Ensemble de véhicules comprenant un premier et un second véhicules routiers (2, 3) attelés mutuellement au moyen d'un dispositif d'attelage, **caractérisé en ce que** le dispositif d'attelage est un dispositif d'attelage selon l'une quelconque des revendications précédentes, **en ce que** le premier véhicule routier (2) est un véhicule tracteur équipé de la traverse (10) comportant une chape d'attelage (5) et **en ce que** le second véhicule routier (3) est un véhicule suiveur équipé du timon d'attelage (6).

15. Véhicule routier **caractérisé en ce qu'**il comporte un dispositif d'attelage (1) selon l'une quelconque des revendications 1 à 13, et **en ce qu'**il comporte le timon d'attelage (6) à l'avant et la traverse (10) comportant une chape d'attelage (5) à l'arrière.

## Patentansprüche

1. Anhängevorrichtung (1), zum Anhängen eines ersten und zweiten Straßenfahrzeugs (2, 3), diese beiden Straßenfahrzeuge (2, 3) enthalten jeweils mindestens zwei Achsen (4), dabei umfasst diese Anhängevorrichtung (1):
• eine Anhängerdeichsel (6), die zur Befestigung am zweiten Straßenfahrzeug (3) vorgesehen ist und einen Anhängering (7) am Ende umfasst; und
• einen Querträger (10), der zur Befestigung am ersten Straßenfahrzeug (2) vorgesehen ist und eine Bolzenkupplung (5) umfasst, vorgesehen zur Aufnahme des Anhängerings (7) zur Verriegelung;
diese Anhängevorrichtung (1) umfasst einen automatischen Verriegelungsmechanismus, vorgesehen zur automatischen Verriegelung des Anhängerings (7) mit der Bolzenkupplung (5), wenn er in die Bolzenkupplung (5) eindringt, infolge der Annäherung des Anhängerings (7) und der Bolzenkupplung (5), und **dadurch gekennzeichnet, dass** der automatische Verriegelungsmechanismus die folgenden Elemente enthält:
• eine Anhängerachse (9) im Querträger (10) beweglich vorgesehen zwischen einer Verriegelungsposition, in der sie in die Bolzenkupplung (5) eindringt, um durch den Anhängering (7) hindurchzuführen und einer Entriegelungsposition, in der der Anhängering (7) freigegeben wird, so dass dieser aus der Bolzenkupplung (5) herausgezogen werden kann, die Anhängerachse (9) ist dabei senkrecht zur Anhängerdeichsel (6), wenn sie sich in der Verriegelungsposition befindet;
• eine Verschiebevorrichtung (15) vorgesehen im Querträger (10) zur Verschiebung der Anhängerachse (9) zwischen ihrer Verriegelungsposition und ihrer Entriegelungsposition;
• eine Detektionsvorrichtung (20) vorgesehen im Querträger (10) zur Erkennung des Vorhandenseins des Anhängerings (7) in der Bolzenkupplung (5), diese Detektionsvorrichtung (20) betätigt automatisch die Verschiebevorrichtung (15), wenn sie das Vorhandensein des Anhängering (7) in der Bolzenkupplung (5) erkennt, so dass die Verschiebevorrichtung (15) die Anhängerachse (9) in seiner Verriegelungsposition verschiebt.

2. Anhängevorrichtung (1) nach Anspruch 1, **dadurch gekennzeichnet, dass** der Anhängering (7) sich in einer vertikalen Ebene befindet und dass die Anhängerachse (9) horizontal ist, oder dass der Anhängering (7) sich in einer horizontalen Ebene befindet und dass die Anhängerachse (9) vertikal ist.

3. Anhängevorrichtung (1) nach Anspruch 1 oder Anspruch 2, **dadurch gekennzeichnet, dass** sie eine Steuervorrichtung enthält, die die Verschiebevorrichtung (15) steuert, wenn sie von einem Benutzer betätigt wird, so dass die Anhängerachse (9) in ihre Entriegelungsposition verschoben wird.

4. Anhängevorrichtung (1) nach irgendeinem der vorangehenden Ansprüche, **dadurch gekennzeichnet, dass** sie ein Seil oder eine Gewindestange zur Entriegelung (26) enthält, die mit der Anhängerachse (9) verbunden ist und das oder die die Anhängerachse (9) in ihre Entriegelungsposition bringen, wenn es oder sie von einem Benutzer betätigt wird.

5. Anhängevorrichtung (1) nach Anspruch 4, **dadurch gekennzeichnet, dass** das Seil oder die Gewindestange zur Entriegelung (26) mit einer Schraube (26') verbunden ist, die für einen Benutzer zugänglich ist, diese Schraube (26') verursacht eine Längsverschiebung des Entriegelungsseils oder der Gewindestange (26) wenn sie gedreht wird.

6. Anhängevorrichtung (1) nach irgendeinem der vorangehenden Ansprüche, **dadurch gekennzeichnet, dass** die Schiebevorrichtung (15) eine elastische Schub- oder Rückstellvorrichtung (16) enthält, die die Anhängerachse (9) in Richtung der Bolzenkupplung (5) zwingt und dadurch dass die Detektionsvorrichtung (20) eine Sperrvorrichtung (23) umfasst, untergebracht in der Bolzenkupplung (5) und die verhindert, dass die Anhängerachse (9) in diese Bolzenkupplung (5) eindringt, diese Sperrvorrichtung (23) ist dazu vorgesehen, mit dem Anhängering (7) in Kontakt zu kommen, wenn sich der Anhängering (7) und die Bolzenkupplung (5) annähern, wodurch die Anhängerachse (9) freigegeben wird, die dann in diesen Anhängering (7) innerhalb der Bolzenkupplung (5) eindringen kann, um den Anhängering (7) mit der Bolzenkupplung (5) zu verriegeln.

7. Anhängevorrichtung (1) nach Anspruch 6, **dadurch gekennzeichnet, dass** die Sperrvorrichtung (23) ein bewegliches Teil (21) enthält, als Anschlag an das freie Endstück (11) der Anhängerachse (9), dieses bewegliche Teil (21) wird über eine zweite elastische Schub- oder Rückstellvorrichtung (24) in Verschlussposition vor der Anhängerachse (9) gehalten, dabei wird dieses bewegliche Teil (21) aus seiner Verschlussposition geschoben, wenn es in Kontakt mit dem Anhängering (7) kommt.

8. Anhängevorrichtung (1) nach irgendeinem der vorangehenden Ansprüche, **dadurch gekennzeichnet, dass** die Verschiebevorrichtung (15) einen Zylinder (18) enthält.

9. Anhängevorrichtung (1) nach Anspruch 8, **dadurch gekennzeichnet, dass** des sich beim Zylinder (18) um einen einfach wirkenden Zylinder mit Feder (17) handelt, der die Stange dieses Zylinders (18) in die Ausgangsposition drückt, die zurückgezogene Position der Zylinderstange (18) ergibt sich, wenn dieser Zylinder (18) unter Druck gesetzt wird.

10. Anhängevorrichtung (1) nach Anspruch 8 oder Anspruch 9, **dadurch gekennzeichnet, dass** die Detektionsvorrichtung (20) einen Positionssensor (22) oder eine mechanische Vorrichtung enthält, die, wenn die Anwesenheit des Anhängering (7) in der Bolzenkupplung (5) erkannt wird, oder wenn die Nähe dieses Anhängerings (7) erkannt wird, veranlasst, dass der Zylinder (18) Schub auf die Anhängerachse (9) in der Bolzenkupplung (5) ausübt, oder den Druck auf den Zylinder (18) beendet, wenn dieser mit einer elastischen Schub- oder Rückstellvorrichtung (16) verbunden ist, was das Schieben der Anhängerachse (9) in der Bolzenkupplung (5) veranlasst.

11. Anhängevorrichtung (1) nach irgendeinem der vorangehenden Ansprüche, **dadurch gekennzeichnet, dass** die Anhängerachse (9) in Längsrichtung in einer Aussparung (12) gleitet, die mindestens eine Aufnahmenut (13) auf dem Innenumfang aufweist und dadurch, dass die Anhängerachse (9) mindestens ein Verriegelungsteil (14) auf dem Außenumfang enthält, vorgesehen um lösbar in mindestens eine Aufnahmenut (13) zu greifen, wenn die Anhängerachse (9) in den Anhängering (7) eingeführt wird, dieses Greifen des mindestens einen Verriegelungsteils (14) in diese mindestens eine Aufnahmenut (13) verriegelt die Anhängerachse (9) in Längsrichtung in Position.

12. Anhängevorrichtung (1) nach Anspruch 11, **dadurch gekennzeichnet, dass** die Verschiebevorrichtung (15) ein Schubglied (19) enthält, das ins Innere der Anhängerachse (9) eindringt, so dass, wenn die Verschiebevorrichtung (15) die Anhängerachse (9) in ihre Verriegelungsposition verschiebt, das Schubglied (19) das mindestens eine Verriegelungsteil (14) nach außen drückt, um es so in der mindestens einen Aufnahmenut (13) zu verriegeln.

13. Anhängevorrichtung (1) nach irgendeinem der vorangehenden Ansprüche, **dadurch gekennzeichnet, dass**:
• der Querträger (10), der zur Befestigung am Straßenfahrzeug (2) fest vorgesehen ist, ein erstes Gehäuse (27) zur elektrischen und/ oder hydraulischen Verbindung enthält;
• die Anhängerdeichsel (6), die zur Befestigung am zweiten Straßenfahrzeug (3) vorgesehen ist, ein zweites Gehäuse (28) zur elektrischen und/ oder hydraulischen Verbindung enthält:
• das erste und zweite Gehäuse (27, 28) zur elektrischen und/ oder hydraulischen Verbindung sind dazu vorgesehen, bei der Annäherung des Anhängerings (7) und der Bolzenkupplung (5) ineinander zu greifen.

14. Kraftfahrzeugkombination mit einem ersten und einem zweiten Straßenfahrzeug (2, 3), angehängt über eine Anhängevorrichtung, **dadurch gekennzeichnet, dass** die Anhängevorrichtung eine Anhängevorrichtung nach irgendeinem der vorangehenden Ansprüche ist, dadurch dass das erste Straßenfahrzeug (2) eine Zugmaschine ist, ausgerüstet mit dem Querträger (10) mit einer Bolzenkupplung (5) und dass das zweite Straßenfahrzeug (3) ein Folgefahrzeug, ausgerüstet mit der Anhängerdeichsel (6) ist.

15. Straßenfahrzeug, **dadurch gekennzeichnet, dass** es eine Anhängevorrichtung (1) nach irgendeinem der vorangehenden Ansprüche 1 bis 13 enthält, und dadurch, dass es eine Anhängerdeichsel (6) vorne enthält und der Querträger (10) eine Bolzenkupplung (5) hinten enthält.

## Claims

1. A coupling device (1) intended to couple a first and a second road vehicle (2, 3), these two road vehicles (2, 3) each comprising at least two axles (4), where said coupling device (1) comprises:
• a drawbar (6) intended to be secured to the second road vehicle (3) and comprising an end coupling eye (7); and
• a crossbar (10) intended to be to the first road vehicle (2) and comprising a drawbar coupling (5) intended to receive the coupling eye (7) for locking;
said coupling device (1) comprising an automatic locking mechanism provided for automatically locking the coupling eye (7) with the drawbar coupling (5) when it enters into the drawbar coupling (5) following the coupling eye (7) and the drawbar coupling (5) coming close, and **characterized in that** the automatic locking mechanism comprises the following means :
• a coupling pin (9) provided in the crossbar (10) of the first road vehicle (2), where this coupling pin (9) is perpendicular to the drawbar coupling (6) when the two road vehicles (2, 3) are coupled and is mobile between a locked position wherein it enters into the drawbar coupling (5) for passing through the coupling eye (7) and an unlocked position in which it releases the coupling eye (7) such that the eye can be extracted from the drawbar coupling (5);
• a displacement device (15) provided in the crossbar (10) of the first road vehicle (2) for moving the coupling pin (9) between the locked position thereof and the unlocked position thereof;
• a detection device (20) provided in the crossbar (10) of the first road vehicle (2) for detecting the presence of the coupling eye (7) in the drawbar coupling (5), where said detection device (20) automatically actuates the displacement device (15) when it detects the presence of the coupling eye (7) in the drawbar coupling (5) in order for the displacement device (15) to move the coupling pin (9) into the locked position thereof.

2. The coupling device (1) according to claim 1, **characterized in that** the coupling eye (7) is located in a vertical plane and the coupling pin (9) is horizontal, or **in that** the coupling eye (7) is located in a horizontal plane and the coupling pin (9) is vertical.

3. The coupling device (1) according to claim 1 or claim 2, **characterized in that** it comprises a command device which, when it is actuated by a user, commands the displacement device (15) such that it moves the coupling pin (9) into the unlocked position thereof.

4. The coupling device (1) according to any one of the preceding claims, **characterized in that** it comprises an unlocking cable or threaded rod (26) linked to the coupling pin (9) and which moves the coupling pin (9) into the unlocked position thereof when it is actuated by a user.

5. The coupling device (1) according to claim 4, **characterized in that** the unlocking cable or threaded rod (26) is connected to a screw (26') accessible to a user, where this screw (26') causes the longitudinal movement of the unlocking cable or threaded rod (26) when it is turned.

6. The coupling device (1) according to any one of the preceding claims, **characterized in that** the displacement device (15) comprises an elastic pushing or return device (16) which forces the coupling pin (9) in the direction of the drawbar coupling (5), the detection device (20) comprises a blocking device (23) which is housed in the drawbar coupling (5) and prevents the coupling pin (9) from entering into said drawbar coupling (5), where this blocking device (23) is suited for coming into contact with the coupling eye (7) when the coupling eye (7) and the drawbar coupling (5) approach, which would release the coupling pin (9) which can then enter into said coupling eye (7) within the drawbar coupling (5) in order to lock the coupling eye (7) with the drawbar coupling (5).

7. The coupling device (1) according to claim 6, **characterized in that** the blocking device (23) comprises a mobile part (21) in butted contact with the free end (11) of the coupling pin (9), where this mobile part (21) is kept in plugging position before the coupling pin (9) by a second elastic pushing or return device (24), and where said mobile part (21) is moved outside of the plugging position thereof when it comes into contact with the coupling eye (7).

8. The coupling device (1) according to any one of the preceding claims, **characterized in that** the displacement device (15) comprises a cylinder (18).

9. The coupling device (1) according to claim 8, **characterized in that** the cylinder (18) is a single acting cylinder associated with a spring (17) which pushes the rod of said cylinder (18) into extended position and where the retracted position of the rod of the cylinder (18) is obtained by putting said cylinder (18) under pressure.

10. The coupling device (1) according to claim 8 or claim 9, **characterized in that** the detection device (20) comprises a position sensor (22) or a mechanical device which, when it detects the presence of the coupling eye (7) in the drawbar coupling (5) or when it detects the proximity of said eye (7), causes operation of the cylinder (18) by pushing of the coupling pin (9) into the drawbar coupling (5) or ends pressurizing of the cylinder (18) if that is combined with an elastic pushing or return device (16), which causes the pushing of the coupling pin (9) into the drawbar coupling (5).

11. The coupling device (1) according to any one of the preceding claims, **characterized in that** the coupling pin (9) slides longitudinally in a housing (12) comprising at least one receiving groove (13) on the inner perimeter thereof and **in that** the coupling pin (9) comprises at least one locking part (14) on the outer perimeter thereof intended for freely engaging in the at least one receiving groove (13) when the coupling pin (9) is inserted into the coupling eye (7), where this engagement of the at least one locking part (14) in the at least one receiving groove (13) longitudinally locks the coupling pin (9) into position.

12. The coupling device (1) according to claim 11, **characterized in that** the displacement device (15) comprises a slider (19) which enters to the inside of the coupling pin (9) such that, when the displacement device (15) moves the coupling pin (9) into the locked position thereof, the slider (19) pushes the at least one locking part (14) outward so as to lock it in the at least one receiving groove (13).

13. The coupling device (1) according to any one of the preceding claims, **characterized in that**:
• the crossbar (10) intended to be secured to the first road vehicle (2) comprises a first electrical and/or fluid connection box (27);
• the drawbar (6) intended to be secured to the second road vehicle (3) comprises a second electrical and/or fluid connection box (28); and
• the first and second electrical and/or fluid connection boxes (27, 28) are intended to engage with each other when the coupling eye (7) and the drawbar coupling (5) approach.

14. Set of vehicles comprising a a first and a second road vehicle (2, 3) coupled to each other with a coupling device (1) **characterized in that** the coupling device (1) is a coupling device (1) according to any one of the preceding claims, **in that** the first road vehicle (2) is a towing vehicle provided with a crossbar (10) comprising a drawbar coupling (5) and **in that** the second road vehicle (3) is a following vehicle provided with a drawbar (6).

15. Road vehicle **characterized in that** it comprises a coupling device (1) according to any one of the claims 1 to 13, and **in that** it comprises a drawbar (6) at the front and a crossbar (10) comprising a drawbar coupling (5) at the rear.
